# EUROPÄISCHE PATENTANMELDUNG

(11) **EP 1 517 276 A2**
(43) Veröffentlichungstag der Anmeldung: **23.03.2005**
(21) Anmeldenummer: 04021294.6
(22) Anmeldetag: 08.09.2004
(51) Int. Cl.: G07F 7/00

(54) **Vorrichtung sowie Verfahren zur Herstellung und zum Vertrieb von Backgut**

(30) Priorität: 18.09.2003 DE 10343706
(71) Anmelder: Werner & Pfleiderer Lebensmitteltechnik GmbH, 91550 Dinkelsbühl (DE)
(72) Erfinder: Knost, Dieter, 91550 Dinkelsbühl (DE); Schmidt, Thomas, 97340 Martinsheim (DE); Meier, Alexander, 91602 Dürrwangen (DE); Habermann, Christian, 91744 Weiltingen (DE); Dannenhauer, Bernd, 91550 Dinkelsbühl (DE); Blümel, Frank, 91614 Mönchsroth (DE)
(74) Vertreter: Hofmann, Matthias, Dr.

(57) **Zusammenfassung**

Eine Vorrichtung (1) zur Herstellung und zum Vertrieb von Backgut umfasst mindestens einen ersten Vorratsbehälter (2) zum Vorhalten einer vorgegebenen ersten Menge von Rohlingen. Zum Erfassen eines Kundenwunsches dient eine erste Erfassungseinrichtung (17). Eine Ausgabeeinrichtung (19) dient zur Ausgabe eines Preises für den erfassten Kundenwunsch. Ein Bezahlvorgang wird mit einer zweiten Erfassungseinrichtung (18) erfasst. Zum Backen von Rohlingen gemäß Kundenwunsch zu fertigem Backgut dient eine Backeinrichtung (8). Das fertige Backgut wird in mindestens einem für den Kunden zugänglichen Vorratsbehälter (2) bereitgestellt. Zwei Fördereinrichtungen (6, 10) dienen zum Fördern der Rohlinge bzw. des fertigen Backguts vom ersten Vorratsbehälter (2) zur Backeinrichtung (8) bzw. von der Backeinrichtung (8) zum zweiten Vorratsbehälter (12). Abhängig von Erfassungsdaten der Erfassungseinrichtungen (17, 18) steuert eine Steuereinrichtung (5) die Fördereinrichtungen (6, 10) und die Backeinrichtung (8). Es resultiert eine Vorrichtung (1) sowie ein hiermit durchführbares Verfahren zur Herstellung und zum Vertrieb von Backgut, welche kosteneffizient betrieben werden können.

## Beschreibung

Die Erfindung betrifft eine Vorrichtung sowie ein Verfahren zur Herstellung und zum Vertrieb von Backgut, wobei eine Selbstdienung durch den Kunden erfolgt.

Derartige Vorrichtungen und Verfahren sind durch offenkundige Vorbenutzung aus Supermärkten bekannt, bei denen in einem Satz von Vorratsbehältern verschiedene Typen fertigen Backguts vorgehalten werden. Gleichzeitig ist bei diesen bekannten Einrichtungen ein Backofen vorgesehen, der nach Bedarf manuell befüllt bzw. nach dem Backen entleert wird. Aufgrund des hiermit verbundenen Personaleinsatzes haben diese bekannten Vorrichtungen und Verfahren noch Verbesserungspotential.

Es ist daher eine Aufgabe der vorliegenden Erfindung, eine Vorrichtung sowie ein Verfahren zur Herstellung und zum Vertrieb von Backgut durch Kunden-Selbstbedienung zu schaffen, welches kosteneffizienter betrieben werden kann.

Diese Aufgabe ist erfindungsgemäß gelöst durch eine Vorrichtung mit den Merkmalen nach Anspruch 1 sowie durch ein Verfahren mit dem Merkmalen nach Anspruch 8.

Nach einem Vorhalten einer vorgegebenen ersten Menge von noch zu backenden Rohlingen arbeitet die erfindungsgemäße Vorrichtung vollautomatisch. Bei den Rohlingen kann es sich um Teiglinge oder um vorgebackene Rohlinge, gefrorenen oder an- bzw. aufgetaut oder in einem anderweitigen Zwischenzustand der Verarbeitung handeln. Die Teiglinge oder Rohlinge können z. B. unter Vakuumbedingungen gelagert sein. Es ist aufgrund des vollautomatischen Arbeitens möglich, rund um die Uhr frischgebackenes Backgut auf Kundenanforderung bereitzustellen. Die Vorrichtung bzw. das Verfahren können dabei so ausgestaltet sein, dass immer erst nach einem Kundenwunsch gebacken wird, sodass der Kunde absolut frische Ware erhält. Nach dem Vorhalten der ersten Menge von Rohlingen ist kein weiterer Personaleinsatz erforderlich. Die erfindungsgemäße Vorrichtung sowie das erfindungsgemäße Verfahren können eingesetzt sein in handwerklichen Bäckereien während ergänzender Öffnungszeiten ohne Personaleinsatz. Alternativ ist ein Einsatz im Lebensmitteleinzelhandel, bei Discountern, in Tankstellen, Kinos oder bei öffentlichen Veranstaltungen wie Konzerten oder Festen möglich.

Weitere Erfassungseinrichtungen nach Anspruch 2 ermöglichen eine genaue Kontrolle der verarbeiteten Menge an Backgut. Insbesondere kann überwacht werden, wann ein Nachfüllen des ersten Vorratsbehälters erforderlich ist. Zudem kann eine vorgegebene zweite Menge fertiggebackener Stücke Backgut im zweiten Vorratsbehälter vorgehalten werden, wobei das Vorhandensein dieser zweiten Menge ebenfalls durch eine Erfassungseinrichtung überwacht werden kann. Dies ermöglicht, dass auf einen Kundenwunsch hin nicht erst ein Backschritt abgewartet werden muss, sondern dass sofort eine Entnahme von fertigem Backgut erfolgen kann.

Ein Bedienfeld nach Anspruch 3 erlaubt eine Bedienung einer erfindungsgemäßen Vorrichtung nach Art eines Geldautomaten.

Bei einer Erfassungseinrichtung nach Anspruch 4 wird die vorgehaltene Menge im zweiten Vorratsbehälter insbesondere auf Basis der momentanen Kundenvorbestellungen vorgegeben. Dies ermöglicht eine Bewältigung, z. B. eines Kundenansturms in Zeitabschnitten mit starker Auslastung der Vorrichtung z. B. Sonntag morgens.

Eine Vorrichtung nach Anspruch 5 erlaubt eine besonders bequeme Vorbestellung.

Ein Rückbestätigungsmodul nach Anspruch 6 ermöglicht eine einfache Quittierung der Vorbestellung.

Ein Rückbestätigungsmodul nach Anspruch 7 vereinfacht die Zuordnung der Vorbestellung zum jeweiligen Kunden.

Die Vorteile des Verfahrens nach den Ansprüchen 8 bis 14 entsprechen denjenigen, die oben im Zusammenhang mit der erfindungsgemäßen Vorrichtung diskutiert wurden.

Ausführungsbeispiele der Erfindung werden nachfolgend anhand der Zeichnung näher erläutert. In dieser zeigen:
- Fig. 1: schematisch eine Vorrichtung zur Herstellung und zum Vertrieb von Backgut;
- Fig. 2: ein schematisches Ablaufschema eines Verfahrens zur Herstellung und zum Vertrieb von Backgut;
- Fig. 3: schematisch eine weitere Ausführung einer Vorrichtung zur Herstellung und zum Vertrieb von Backgut; und
- Fig. 4: ein schematisch Ablaufschema eines weiteren Verfahrens zur Herstellung und zum Vertrieb von Backgut.

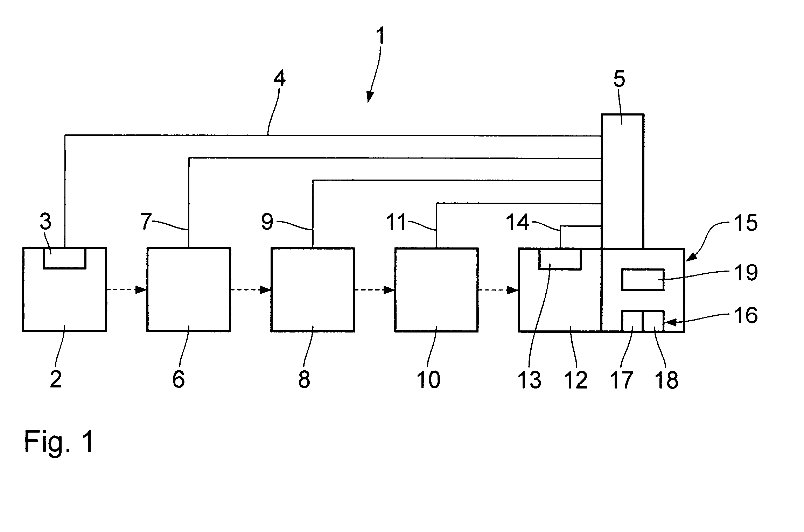

Eine Vorrichtung 1 zur Herstellung und zum Vertrieb von Backgut ist schematisch in Figur 1 dargestellt. Die Vorrichtung 1 umfasst einen ersten Vorratsbehälter 2, in dem eine vorgegebene erste Menge von insbesondere teil- oder tiefgefrorenen Rohlingen vorgehalten wird, als Waage. Alternativ können auch vorgebackene oder in einem anderweitigen Verarbeitungszustand vorliegende Rohlinge bzw. Teiglinge, z. B. auch unter Vakuumbedingungen gelagerte Rohlinge bzw. Teiglinge, vorgehalten werden. Zur Erfassung dieser ersten Menge von Rohlingen weist der erste Vorratsbehälter 2 eine Mengen-Erfassungseinrichtung 3 auf. Diese kann als Füllstandssensor oder auch als Zähleinrichtung für die in den ersten Vorratsbehälter 2 eingegebenen Rohlinge ausgestaltet sein. Anstelle eines einzelnen ersten Vorratsbehälters 2 kann auch eine Mehrzahl erster Vorratsbehälter 2, insbesondere für verschiedene Typen von Rohlingen, vorgesehen sein. Die Mengen-Erfassungseinrichtung 3 ist über eine Signalleitung 4 mit einer zentralen Steuereinrichtung 5 der Vorrichtung 1 verbunden.

Der erste Vorratsbehälter 2 steht mit einer ersten Fördereinrichtung 6 in Förderverbindung, wie in Figur 1 durch einen gestrichelten Pfeil angedeutet. Über eine Signalleitung 7 steht die erste Fördereinrichtung 6 mit der Steuereinrichtung 5 in Verbindung. Die erste Fördereinrichtung 6 fördert die Rohlinge vom ersten Vorratsbehälter 2 hin zum Eingang einer Backeinrichtung 8 zum Backen der Rohlinge. Bei der Backeinrichtung 8 handelt es sich insbesondere um einen mit Umluft beheizten Rotations-Ofen, durch den die Rohlinge gefördert werden. Die Backeinrichtung 8 steht über eine Signalleitung 9 mit der Steuereinrichtung 5 in Verbindung. In Förderverbindung für Rohlinge steht die Backeinrichtung 8 ausgangsseitig mit einer zweiten Fördereinrichtung 10. Letztere ist über eine Signalleitung 11 mit der Steuereinrichtung 5 verbunden. Die zweite Fördereinrichtung 10 fördert die gebackenen Rohlinge von der Backeinrichtung 8 hin zu einem für Kunden zugänglichen zweiten Vorratsbehälter 12 für das Backgut. Der zweite Vorratsbehälter 12 weist eine weitere Mengen-Erfassungseinrichtung 13 auf, die wie die Mengen-Erfassungseinrichtung 3 des ersten Vorratsbehälters 2 ausgeführt sein kann. Über eine Signalleitung 14 steht die Mengen-Erfassungseinrichtung 13 mit der Steuereinrichtung 5 in Verbindung. Auch der zweite Vorratsbehälter 12 kann in eine Mehrzahl einzelner Vorratsbehälter, insbesondere für bestimmte Typen von Backgut, unterteilt sein.

Benachbart zum zweiten Vorratsbehälter 12 weist die Vorrichtung 1 ein Kundenterminal 15 auf. Dieses steht mit der Steuereinrichtung 5 in Signalverbindung. Das Kundenterminal 15 weist ein Eingabefeld 16 auf. Dieses ist unterteilt in eine erste Erfassungs-Einrichtung 17 zur Erfassung eines Kundenwunsches, das heißt der Art und der Menge der gewünschten Stücke Backgut, und eine zweite Erfassungseinrichtung 18 zur Erfassung eines Bezahlvorgangs. Bei der ersten Erfassungseinrichtung 17 kann es sich beispielsweise um eine Eingabetastatur oder um ein Touch-Screen-Display handeln. Die zweite Erfassungseinrichtung 18 kann als Münzeinwurf oder als Eingabe/Verarbeitungseinrichtung für Geldscheine, Geldkarten, EC- oder Scheckkarten oder auch von speziellen Kundenkarten ausgestaltet sein. Ferner umfasst das Kundenterminal 15 noch ein Display 19.

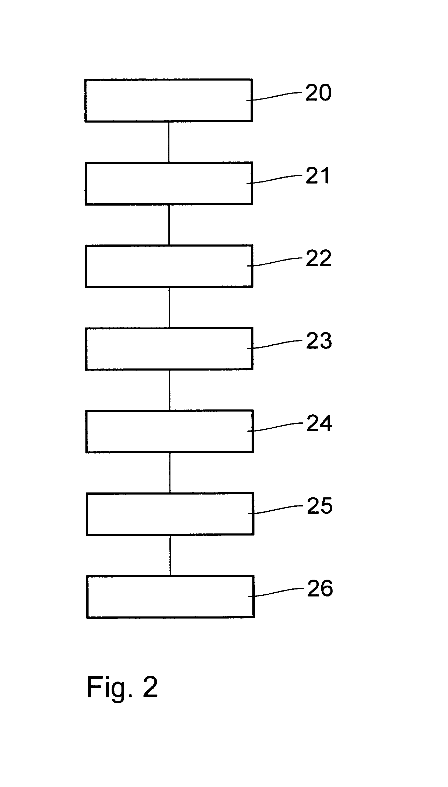

Der Ablauf eines Verfahrens zur Herstellung und zum Vertrieb von Backgut mit der Vorrichtung 1 nach Figur 1 wird nachfolgend anhand des schematischen Ablaufschemas von Figur 2 beschrieben:

In einem Vorbereitungsschritt 20 wird zunächst eine vorgegebene erste Menge von Rohlingen im ersten Vorratsbehälter 2 vorgehalten. Diese erste Menge wird von der Mengen-Erfassungseinrichtung 3 überwacht. Entsprechende Mengendaten werden über die Signalleitung 4 an die Steuereinrichtung 5 übertragen. In einem weiteren, optionalen Vorbereitungsschritt 21 werden die beiden Fördereinrichtungen 6, 10 und die Backeinrichtung 8 von der Steuereinrichtung 5, gesteuert über die Signalleitungen 7, 9, 11 derart in Betrieb genommen, dass im zweiten Vorratsbehälter 12 eine vorgegebene zweite Menge fertiggebackener Stücke Backgut vorgehalten wird. Die in den Vorbereitungsschritten 20, 21 vorgegebene erste und zweite Menge werden über die Mengen-Erfassungseinrichtungen 3, 13 überwacht.

In einem Erfassungsschritt 22 wird der Kundenwunsch erfasst, indem mittels der Steuereinrichtung 5 die bei der ersten Erfassungseinrichtung 17 erfolgte Kundeneingabe ausgelesen wird. Anhand des Kundenwunsches berechnet die Steuereinrichtung 5 den zugeordneten Preis und gibt diesen in einem Ausgabeschritt 23 auf dem Display 19 aus. Eine Bezahlaktion des Kunden wird vom Kundenterminal 15 über die zweite Erfassungseinrichtung 18 erfasst. Dies erfolgt in einem Erfassungsschritt 24. Auch diese Information wird an die Steuereinrichtung 5 weitergeleitet. Beim Erfassungsschritt 24 kann es sich z. B. um eine Registrierung eines Münzeinwurfs oder einer Geldscheineingabe handeln. Alternativ kann im Erfassungsschritt 24 eine Geldkarte oder eine EC- oder Scheckkarte oder eine spezielle Kundenkarte verarbeitet werden. Hierzu steht das Kundenterminal 15 optional über eine nicht dargestellte Datenfernübertragungsleitung mit dem entsprechenden Geldinstitut in Verbindung.

Nach dem Erfassungsschritt 24 steuert in einem Backschritt 25 die Steuereinrichtung 5 die erste Fördereinrichtung 6, die Backeinrichtung 8 sowie die zweite Fördereinrichtung 10 so an, dass die gewünschten Mengen der gewünschten Typen von Backgut im zweiten Vorratsbehälter 12 zur Verfügung stehen. In einem Bereitstellungsschritt 26 wird das gewünschte Backgut im Vorratsbehälter 12 für den Kunden zur Entnahme bereitgestellt.

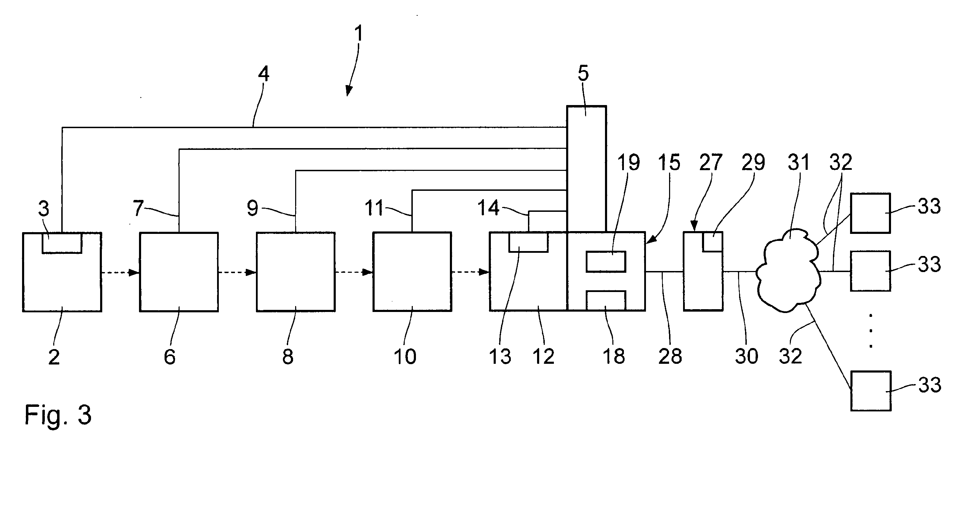

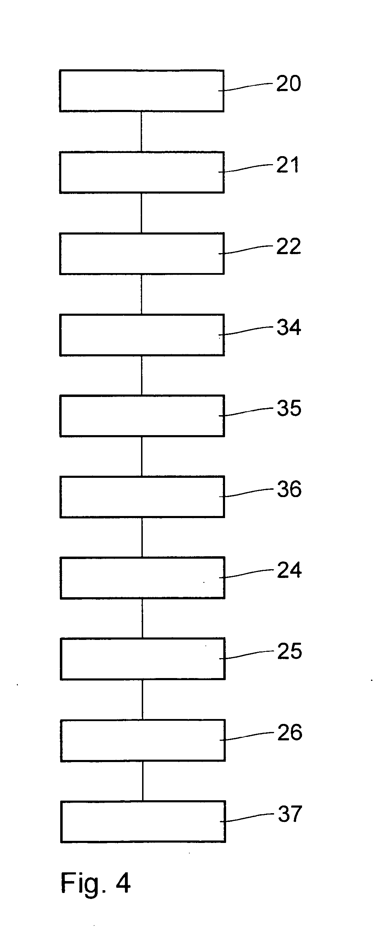

Eine weitere Ausführungsform einer Vorrichtung zur Herstellung und zum Vertrieb von Backgut wird nachfolgend anhand der Figuren 3 und 4 beschrieben. Einzelheiten der Vorrichtung sowie des Verfahrens zur Herstellung und zum Vertrieb von Backgut, die denjenigen entsprechen, die schon unter Bezugnahme auf die Figuren 1 und 2 erläutert wurden, tragen die gleichen Bezugszeichen und werden nicht nochmals im Einzelnen diskutiert.

Anstelle der ersten Erfassungseinrichtung 17 der Ausführung nach Figur 1 weist die Vorrichtung 1 nach Figur 3 eine zur Datenfernübertragung geeignete erste Erfassungseinrichtung 27 auf, die über eine Signalleitung 28 mit dem Kundenterminal 15 in Verbindung steht. Die erste Erfassungseinrichtung 27 bei der Ausführung nach Figur 3 dient zur Erfassung einer externen Kundenvorbestellung. Zur Rückbestätigung einer derartigen Kundenvorbestellung weist die erste Erfassungseinrichtung 27 ein Rückbestätigungsmodul 29 auf. Über eine Datenverbindung 30 steht die erste Erfassungseinrichtung 27 mit einem WAN (Wide Area Network), z. B. dem Internet oder einem Telefonnetz, in Verbindung. Letzteres ist über weitere Datenverbindungen 32 mit externen Kundenendgeräten 33, z. B. einem Mobiltelefon oder einem PC, verbunden.

Anhand des schematischen Ablaufschemas nach Figur 4 wird nachfolgend ein Verfahren zur Herstellung und zum Vertrieb von Backgut mit der Vorrichtung 1 nach Figur 3 beschrieben. Nach dem Erfassungsschritt 22 erfolgt beim Verfahren nach Figur 4 zunächst ein Rückbestätigungsschritt 34. Hierzu übergibt das Rückbestätigungsmodul 29 über die erste Erfassungseinrichtung 27 und das WAN 31 an das jeweilige Kundenendgerät 33 die Menge und den Typ des vorbestellten Backguts sowie den zugehörigen Preis. In diesem Falle ist also die erste Erfassungseinrichtung 27 eine Ausgabeeinrichtung der Ausführung nach den Figuren 3 und 4 zur Ausgabe eines Preises für den erfassten Kundenwunsch. Zudem übergibt das Rückbestätigungsmodul 29 in einem Übertragungsschritt 35 einen Zugangsschlüssel, insbesondere einen Zahlencode, mit dem sich der Kunde bei der Abholung seiner Vorbestellung am Kundenterminal 15 identifizieren kann. Bei der Abholung des vorbestellten Backguts gibt der Kunden dann zunächst in einem Identifikationsschritt 36 den beim Übertragungsschritt 35 erhaltenen Zugangsschlüssel in die Erfassungseinrichtung 18 des Kundenterminals 15 ein. Nach erfolgter Identifizierung des Kunden im Identifikationsschritt 36 laufen die Schritte 24 bis 26, wie im Zusammenhang mit Figur 2 beschrieben, ab.

Bei einer Variante des Verfahrens nach Figur 4 überträgt die erste Erfassungseinrichtung 27 die erhaltenen Mengen- und Typdaten einer kundenspezifischen Vorbestellung gemeinsam mit einer vom Kunden angegebenen Abholzeit an die Steuereinrichtung 5. Rechtzeitig vor dieser Abholzeit steuert die Steuereinrichtung 5 die Fördereinrichtungen 6 und 10 sowie die Backeinrichtungen 8 zur Herstellung des gewünschten Backguts an. Dieses liegt dann vor dem Identifikationsschritt 36 schon im Vorratsbehälter 12 bereit. Beim Bezahlen (Erfassungsschritt 24) wird, gesteuert über die Steuereinrichtung 5, in einem Freigabeschritt 37 eine Verriegelungseinrichtung des zweiten Vorratsbehälters 12 freigegeben.

Alternativ zu einer Bezahlung am Kundenterminal 15 kann insbesondere bei der Ausführung nach den Figuren 3 und 4 auch eine Bezahlung über das WAN 31 erfolgen. In diesem Falle ist die erste Erfassungseinrichtung 27 auch gleichzeitig die Erfassungseinrichtung zum Erfassen des Bezahlvorgangs. Bei einer Variante der Vorrichtung 1 nach Figur 3 ist zusätzlich zur ersten Erfassungseinrichtung 27 noch eine erste Erfassungseinrichtung 17 entsprechend derjenigen vorgesehen, die im Zusammenhang mit der Ausführung nach den Figuren 1 und 2 schon beschrieben wurde.

## Patentansprüche

1. Vorrichtung (1) zur Herstellung und zum Vertrieb von Backgut
- mit mindestens einem ersten Vorratsbehälter (2) zum Vorhalten einer vorgegebenen ersten Menge von Rohlingen,
- mit einer ersten Erfassungseinrichtung (17; 27) zum Erfassen eines Kundenwunsches,
- mit einer Ausgabeeinrichtung (19; 27) zur Ausgabe eines Preises für den erfassten Kundenwunsch,
- mit einer zweiten Erfassungseinrichtung (18; 18, 17) zum Erfassen eines Bezahlvorgangs,
- mit einer Backeinrichtung (8) zum Backen von Rohlingen gemäß Kundenwunsch zu fertigem Backgut,
- mit einer ersten Fördereinrichtung (6) zum Fördern der Rohlinge vom ersten Vorratsbehälter (2) zur Backeinrichtung (8),
- mit mindestens einem für den Kunden zugänglichen zweiten Vorratsbehälter (12) für fertiges Backgut,
- mit einer zweiten Fördereinrichtung (10) zum Fördern fertigen Backguts von der Backeinrichtung (8) zum zweiten Vorratsbehälter (12), und
- mit einer Steuereinrichtung (5), welche abhängig von Erfassungsdaten der Erfassungseinrichtungen (17, 18; 18, 27) die Fördereinrichtungen (6, 10) und die Backeinrichtung (8) steuert.

2. Vorrichtung nach Anspruch 1, **gekennzeichnet durch** mindestens eine weitere Erfassungseinrichtung (3, 13) zur Erfassung einer ersten Menge von Rohlingen im ersten Vorratsbehälter (2) und/oder zur Erfassung einer zweiten Menge fertiggebackener Stücke Backgut im zweiten Vorratsbehälter (12).

3. Vorrichtung nach Anspruch 1 oder 2, **dadurch gekennzeichnet, dass** eine der Erfassungseinrichtungen (3, 13, 17, 18; 3, 13, 18, 27) ein Bedienfeld umfasst.

4. Vorrichtung nach Anspruch 2 oder 3, **dadurch gekennzeichnet, dass** die erste Erfassungseinrichtung (27) zum Erfassen eines Kundenwunsches so ausgestaltet ist, dass der Kundenwunsch durch Abfragen einer Kundenvorbestellung erfasst wird, wobei die Steuereinrichtung (5) insbesondere so ausgeführt ist, dass unter Berücksichtigung der mit der ersten Erfassungseinrichtung (27) erfassten Kundenvorbestellung und der Ausgabedaten der weiteren Erfassungseinrichtungen (3, 13) zur Erfassung der Mengen von Rohlingen einerseits und von fertiggebackenen Stücken Backgut andererseits in den Vorratsbehältern (2, 12) eine Anpassung der zweiten Menge Backgut erfolgt und die Fördereinrichtungen (6, 10) und die Backeinrichtung (8) so angesteuert werden, dass im zweiten Vorratsbehälter (12) die zweite Menge Backgut vorgehalten wird.

5. Vorrichtung nach Anspruch 4, **dadurch gekennzeichnet, dass** die erste Erfassungseinrichtung (27) eine Datenfernübertragungseinrichtung umfasst, zu der über ein Kundenendgerät (33), insbesondere über ein Mobiltelefon oder das Internet, eine Kommunikationsverbindung aufgebaut werden kann.

6. Vorrichtung nach Anspruch 4 oder 5, **dadurch gekennzeichnet, dass** die erste Erfassungseinrichtung (27) ein Rückbestätigungsmodul (29) zur Rückbestätigung einer Kundenvorbestellung aufweist.

7. Vorrichtung nach einem der Ansprüche 4 bis 6, **dadurch gekennzeichnet, dass** die erste Erfassungseinrichtung (27) ein Rückbestätigungsmodul (29) zum Übertragen eines Zugangsschlüssels, insbesondere eines Zahlencodes aufweist, und dass eine weitere Erfassungseinrichtung (18) zum Erfassen einer Kundeneingabe des Zugangsschlüssels ausgeführt ist, wobei insbesondere der zweite Vorratsbehälter (12) eine Verriegelungseinrichtung aufweist, welche abhängig vom erfassten Zugangsschlüssel freigegeben wird.

8. Verfahren zur Herstellung und zum Vertrieb von Backgut mit folgenden Verfahrensschritten:
- Vorhalten (20) einer vorgegebenen ersten Menge von Rohlingen,
- Erfassen (22) eines Kundenwunsches,
- Ausgabe (23; 34) eines Preises für den erfassten Kundenwunsch,
- Erfassen (24) eines Bezahlvorgangs,
- Backen (25) von Rohlingen gemäß Kundenwunsch zu fertigem Backgut,
- Bereitstellen (26) des Backguts in mindestens einem für den Kunden zugänglichen Vorratsbehälter (12).

9. Verfahren nach Anspruch 8, **gekennzeichnet durch** ein Vorhalten (21) einer vorgegebenen zweiten Menge fertiggebackener Stücke Backgut im Vorratsbehälter ( 12).

10. Verfahren nach Anspruch 8 oder 9, **dadurch gekennzeichnet, dass** der Kundenwunsch durch Abfragen (22) einer Kundeneingabe auf einem Bedienfeld (17) erfasst wird.

11. Verfahren nach Anspruch 8 oder 9, **dadurch gekennzeichnet, dass** der Kundenwunsch durch Abfragen (22) einer Kundenvorbestellung erfasst wird, wobei insbesondere die Kundenvorbestellungen beim Vorhalten (21) der zweiten Menge rechnergesteuert berücksichtigt werden.

12. Verfahren nach Anspruch 11, **gekennzeichnet durch** eine Erfassung (22) über eine Datenfernübertragung, insbesondere über ein Mobiltelefon oder das Internet.

13. Verfahren nach Anspruch 11 oder 12, **gekennzeichnet durch** eine Rückbestätigung (34) der Kundenvorbestellung.

14. Verfahren nach einem der Ansprüche 11 bis 13, **gekennzeichnet durch** folgende weitere Verfahrensschritte:
- Übertragen (35) eines Zugangsschlüssels, insbesondere eines Zahlencodes mit Rückbestätigung (34) der Kundenvorbestellung,
- Erfassen einer Kundeneingabe (36) des Zugangsschlüssels,
- Zugänglichmachen (37) des Inhalts des zweiten Vorratsbehälters (12) für den jeweiligen Kunden.
